# EUROPEAN PATENT APPLICATION

(11) **EP 1 650 760 A2**
(43) Date of publication of application: **26.04.2006**
(21) Application number: 05109162.7
(22) Date of filing: 04.10.2005
(51) Int. Cl.: G11B 20/12, G11B 20/18, G11B 27/32

(54) **Recording method, recording apparatus, and playback apparatus for write-once media**

(30) Priority: 20.10.2004 JP 2004306081
(71) Applicant: KABUSHIKI KAISHA TOSHIBA, Tokyo 105-8001 (JP)
(72) Inventor: Kubo, Masao, 105-8001, Tokyo (JP)
(74) Representative: Henkel, Feiler & Hänzel

(57) **Abstract**

A write-once medium having a limited storage capacity can be efficiently used. When sequentially forming a plurality of recording zones (Rzone 3, 4, 5) from a lead-in side to a lead-out side, first, the first digital data including the first digital content (<7> real-time data 2) and the first management information (<8> changed file/VAT_ICB) is recorded in at least one (Rzone 4) of the plurality of recording zones. Next, the second digital data inducing the second digital content (<10> real-time data 3) and the second management information (<11> changed file/VAT_ICB) is recorded without closing the zone (Rzone 4). After that, the zone (Rzone 4) is closed (<12> Rzone close).

## Description

The present invention relates to a recording method for a WORM recording medium (e.g., a write-once medium such as a DVD-R disc) and, more particularly, to a method and apparatus for efficiently using a write-once medium which has limited storage capacity.

As a video recording format of a digital versatile disc (DVD), a DVD video format used in DVD software in cell (or package) sales, or a DVD-VR format used in a DVD recorder to perform an editing process is available. Conventionally, the DVD-VR format is mainly used on a DVD-RAM or DVD-RW (Jpn. Pat. Appln. KOKAI Publication No. 9-259538).

These DVD-RAM and DVD-RW are rewritable media to advantageously perform the editing process. However, the unit costs of these media are relatively high. In contrast to this, the cost of the DVD-R is relatively low. Conventionally, by making a point of playback compatibility with a DVD player, information has been mainly recorded on the DVD-R in the DVD video format. However, a recording process on the DVD-R in the DVD-VR format is also officially approved as a DVD forum standard.

It is an object of the present invention to cause a write-once medium such as a DVD-R to record picture information in a video recording format such as a DVD-VR format. It is another object of the present invention to efficiently use a write-once medium which has limited storage capacity.

In a recording method according to an embodiment of the present invention, for example, there is provided a recording method for executing digital recording on a write-once medium having a recording area which is configured to include a plurality of recording zones between a lead-in side and a lead-out side. In this method, when a plurality of recording zones (Rzones 3, 4, and 5) are to be sequentially formed from the lead-in side to the lead-out side, in at least one (Rzone 4) of the plurality of recording zones, first digital data including a first digital content (<7> real-time data 2) and first management information (<8> changed file/VAT_ICB) is recorded (steps ST804 to ST808). Next, second digital data including a second digital content (<10> real-time data 3) and second management information (<11> changed file/VAT_ICB) is recorded without closing the one zone (Rzone 4) (NO in step ST800c) (steps ST804 to ST808), and the one zone (Rzone 4) is then closed (<12> Rzone close; step ST809).

On a write-once medium such as a DVD-R, picture information can be recorded in a video recording format such as a DVD-VR format using a plurality of recording zones.

A recording zone (Rzone) close process need not always be executed for every video recording process. Since this process can be arbitrarily executed, the capacity of a management area (RMA) can be saved. Alternatively, the integrity of important data (e.g., a video recording program that a user wants to store) can be ensured by log management.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram for explaining the outline of a video recording apparatus according to an embodiment of the present invention;
FIG. 2 is a view for explaining the relationship between management information and real picture data according to the embodiment of the present invention;
FIG. 3 is a schematic view for explaining the arrangement of a directory and file defined in a DVD video recording standard (DVD-VR standard);
FIG. 4 is a flowchart for explaining an example of a video recording process in the video recording apparatus according to the embodiment of the present invention;
FIG. 5 is a view for explaining an example of the shift of a recording area when the video recording process is performed on a DVD-R disc in the DVD-VR format;
FIG. 6 is a table showing an example of log information (VAT_ICB with VAT) recorded at the end of a zone in the recording area shown in FIG. 5;
FIG. 7 is a view for explaining the outline of the process of, when a mechanical damage occurs on the DVD-R disc during video recording in the DVD-VR format, reusing the disc which is unusable because of the damage;
FIG. 8 is a flowchart for explaining an example of a processing sequence (process on a disc drive side) for repairing the mechanical damage on the unavailable disc;
FIG. 9 is a flowchart for explaining an example of a processing sequence (process on a MPU 30 side shown in FIG. 1) for generating a new video recordable zone on the DVD-R disc after repairing the mechanical damage;
FIG. 10 is a view for explaining the state of a write-once medium upon initialization;
FIG. 11 is a view for explaining the state of the write-once medium which is used for the recording process upon initialization;
FIG. 12 is a view showing how to form a plurality of zones (a plurality of Rzones), and how to use management information (RMA) of a medium corresponding to the recording process, when the recording process is performed on the write-once medium upon initialization;
FIG. 13 is a view showing how to use a zone (Rzone 4) in which the recording process is performed on the write-once medium upon initialization according to an embodiment of the present invention; and
FIG. 14 is a flowchart for explaining an example of a process for initializing this medium again, after the recording process is performed on the write-once medium upon initialization.

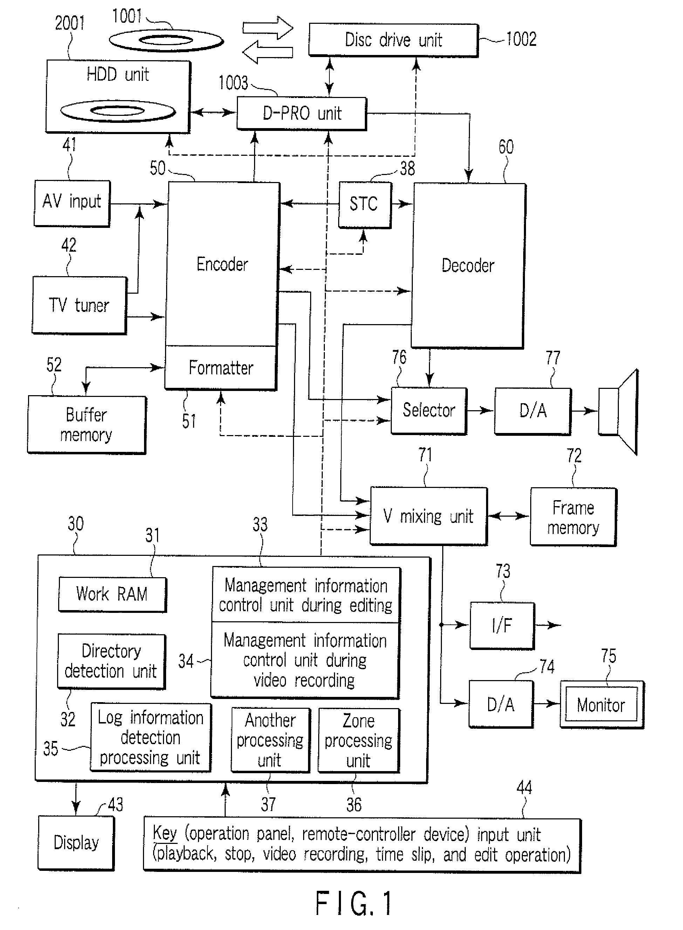

An embodiment of the present invention will be described below with reference to accompanying drawing. FIG. 1 is a block diagram showing an aspect of a video recording apparatus to which the present invention is applied. In this embodiment, an apparatus (a DVD-VR recorder with an HOD) which can handle both an optical disc such as a DVD-R and a hard disc is described as a recording apparatus. However, a semiconductor memory or the like may also be used as the recording medium, as needed. In FIG. 1, the apparatus is roughly constructed by recording unit blocks on the left side, and playback unit blocks on the right side.

The video recording apparatus shown in FIG. 1 has two different types of disc drive units. First, the video recording apparatus includes disc drive unit 1002 which reads/writes information by rotatably driving an optical disc (DVD-RAM, DVD-RW, or DVD-R) 1001 serving as the first medium which is an information recording medium on which a video file is formed. The video recording apparatus also includes hard disc drive unit 2001 which drives the hard disc serving as the second medium. Data processor 1003 can supply recording data to disc drive unit 1002 and hard disc drive unit 2001, and receive a playback signal from these units. This disc drive unit 1002 includes a rotation control system, laser driving system, and optical system for optical disc 1001. Data processor 1003 handles data for each recording process or playback process, and includes a buffer circuit, modulation/demodulation circuit, error correction unit, and the like.

The video recording apparatus shown in FIG. 1 mainly comprises encoder 50 which is included on the video recording side, decoder 60 which is included on the playback side, and microcomputer block 30 which controls the operation of the apparatus main body. Encoder 50 has a video/audio analog-to-digital converter which converts an input analog video/audio signal into a digital video/audio signal, a video encoder, and an audio encoder. This encoder 50 also has a sub-picture encoder. The format of an output from encoder 50 is converted into a predetermined DVD-RAM format by formatter 51 with a buffer memory. The converted format is supplied to above-described data processor 1003. Encoder 50 receives an external analog video signal and external analog audio signal from AV input unit 41, or an analog video signal and analog audio signal from TV tuner 42.

Note that when directly receiving a directly compressed digital video signal and digital audio signal, encoder 50 can directly supply the compressed digital video signal and digital audio signal to formatter 51. This encoder 50 can also directly supply the digital video signal and digital audio signal which are converted into the analog video signal and analog audio signal to video mixing unit 71 and audio selector 76. The video encoder in encoder 50 converts the digital video signal into a digital video signal compressed at variable bit rate according to the MPEG2 or MPEG1 standard. The digital audio signal is converted into a digital audio signal or linear PCM digital audio signal compressed at fixed bit rate on according to the MPEG or AC-3 standard.

When the sub-picture signal is output from AV input unit 41 (for example, when a sub-picture signal is output from a DVD video player with an independent output terminal), or when a DVD video signal in such a data structure is broadcast and received by TV tuner 42, the sub-picture signal in the DVD video signal is encoded (compressed by runlength encoding) by the sub-picture encoder. The encoded sub-picture signal becomes a sub-picture bitmap. The encoded digital video signal, digital audio signal, and sub-picture data are converted into packs, i.e., a video pack, audio pack, and sub-picture pack by formatter 51. These packs are then collected and converted into packs in a format (DVD video format) defined by the DVD video standard, or a format (DVD-VR format) defined by the DVD-recording standard.

The apparatus shown in FIG. 1 supplies information (e.g., video pack, audio pack, and sub-picture pack) formatted by formatter 51, and generated management information to hard disc drive unit 2001 or data disc drive unit 1002 via data processor 1003. The supplied information can be recorded on the hard disc or optical disc 1001. The information recorded on the hard disc or optical disc 1001 can also be recorded on optical disc 1001 or the hard disc via data processor 1003 and disc drive unit 1002. Furthermore, video objects in a plurality of programs recorded on the hard disc or optical disc 1001 can be edited such that a part of the video objects is deleted, and the video objects in different programs are linked. These operations can be performed since the DVD-VR format used in the embodiment of the present invention defines an available data unit to easily perform the edit process.

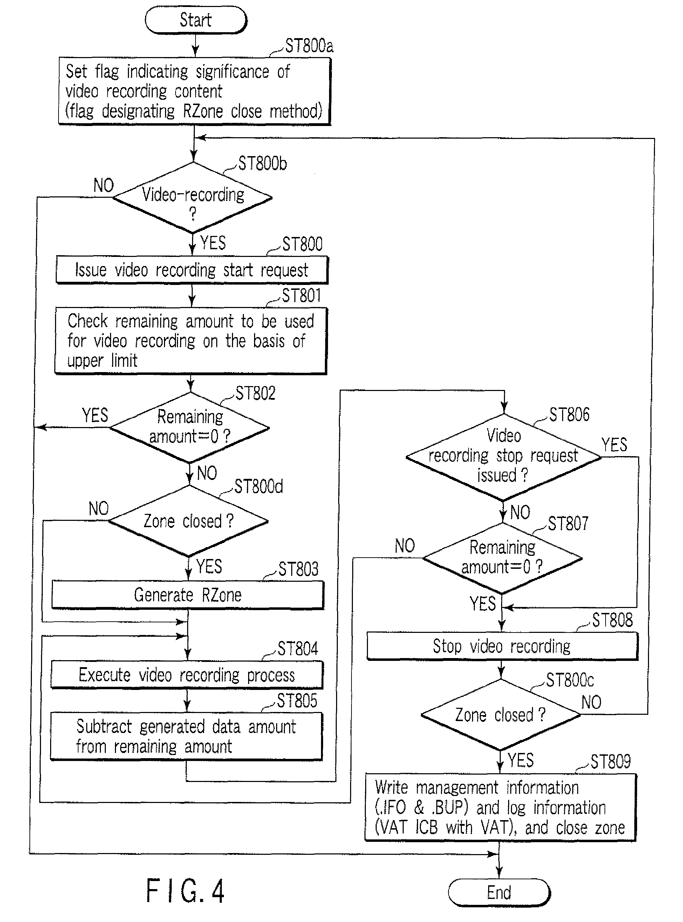

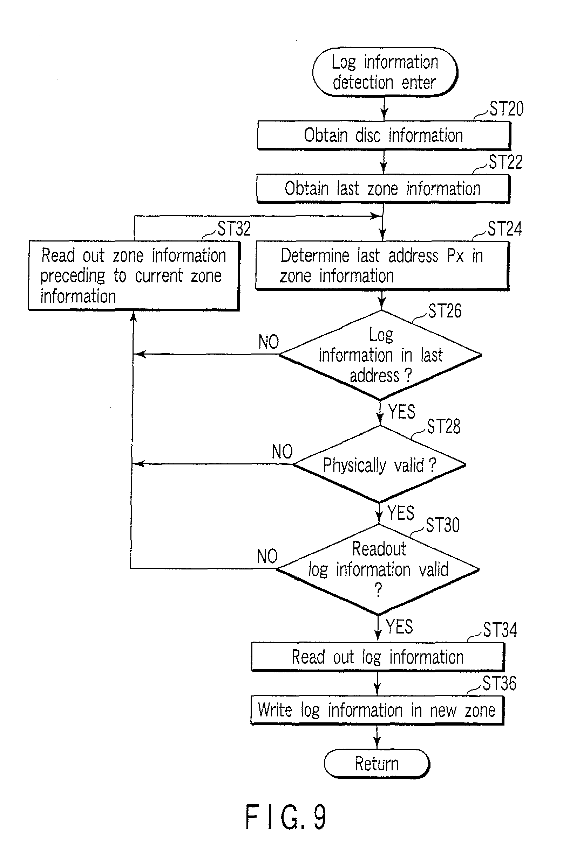

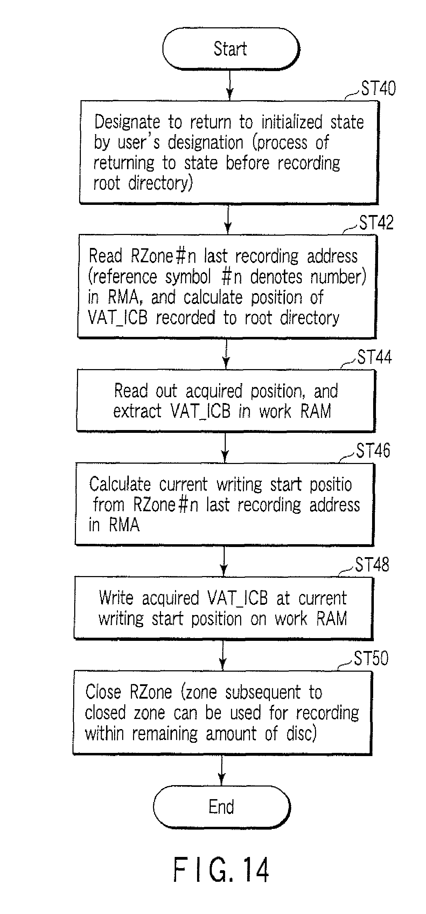

Microcomputer block 30 includes a microprocessing unit (MPU) or central processing unit (CPU), a ROM written with control programs and the like (e.g., firmware for controlling the apparatus as shown in FIGS. 4, 8, and 9), and a RAM which provides a work area required for executing the programs. The MPU of microcomputer block 30 executes, in accordance with the control program stored in the ROM, by using its RAM as a work area, defect location detection process, unrecorded area detection process, video recorded information recording position setting process, UDF recording process, AV address setting process, log information detection process, and the like. Microcomputer block 30 which has an information processing unit required for controlling the entire system includes work RAM 31, directory detection unit 32, VMG (entire video management information) information generation unit, copy-related information detection unit, copy & scrambling information processing unit (RDI processing unit), packet header processing unit, sequence header processing unit, and aspect ratio information processing unit. Microcomputer block 30 also has processing unit 36 for performing the process (part of the process shown in FIG. 4) in the zone (Rzone), processing unit 35 for the log information detection process (the process shown in FIG. 9), management information control unit 34 used during video recording, and management information control unit 33 used during editing. For example, the partially-used disc is initialized again (FIG. 14) in another processing unit 37.

Of the execution results of MPU 30, the contents that a user should know are displayed on display 43 in the picture data recording/playback apparatus, or displayed on a monitor display by on-screen display (OSD). Microcomputer block 30 has key input unit 44 which supplies an operation signal for operating this apparatus. This key input unit 44 corresponds to, e.g., operation switches arranged on the main body of the video recording apparatus, or a remote-controller device. Note that input unit 44 may be a personal computer connected to the video recording apparatus according to the embodiment of the present invention, via a wired communication, wireless communication, optical communication, infrared communication, or the like. In each arrangement, when the user operates this key input unit 44, for example, the input picture/audio signal can be recorded, the recorded contents can be played back, or the video recorded contents can be edited.

Note that microcomputer block 30 controls disc drive unit 1002, hard disc drive unit 2001, data processor 1003, encoder 50, and/or decoder 60 at timings based on the timing data from a system time clock (STC) 38. The video recording/playback operations are generally executed in synchronism with time clocks from STC 38, but other processes may be executed at timings independent of STC 38.

Decoder 60 comprises a separator for separating and extracting the respective packs from DVD format signals with the pack structure, a memory used in executing pack separation and other signal processes, a V decoder for decoding main picture data (the contents of video packs) separated by the separator, an SP decoder for decoding sub-picture data (the contents of sub-picture packs) separated by the separator, an A decoder for decoding audio data (the contents of audio packs) separated by the separator. This decoder 60 also comprises a video processor for appropriately mixing decoded sub-picture data with the decoded main picture to superpose sub-picture data such as menus, highlight buttons, superimposed dialogs, and the like on the main picture, and outputting them.

The output video signal from decoder 60 is input to video mixing unit 71. This video mixing unit 71 mixes the text data, and is connected to a line which directly captures the signals from TV tuner 42 and AV input unit 41. Video mixing unit 71 is also connected to frame memory 72 serving as a buffer. When an output from video mixing unit 71 is an analog output, the information is externally output via interface 73. If the output from video mixing unit 71 is a digital output, the information is externally output via digital-to-analog converter 74.

The output audio signal from decoder 60 is converted to the analog output audio signal by digital-to-analog converter 77 via selector 76, and then externally output. Audio selector 76 is controlled in accordance with the select signal from microcomputer block 30. Accordingly, when directly monitoring the digital signals from TV tuner 42 and AV input unit 41, this selector 76 can also directly select the signal which has passed through encoder 50.

Note that, formatter 51 in encoder 50 generates segmentation information during video recording, and periodically sends it to the MPU of microcomputer block 30 (information in GOP head interrupt or the like). The segmentation information includes the number of packs of VOBUs, the end address of I-picture data from the head of the VOBU, the playback time of the VOBU, and the like. At the same time, information from the aspect information processing unit is sent to the MPU at video recording start time. The MPU then generates VOB stream information (STI). Note that the STI stores resolution data, aspect data, and the like to initialize each decoder on the basis of the information.

In the apparatus shown in FIG. 1, one video file is recorded for each disc. In order to continue playback without being interrupted while accessing (seeking) data, a minimum continuous playback information unit (size) is defined. This unit is called a contiguous data area (CDA). The CDA size is an integral multiple of error correction code (ECC) block (16 sectors). In a file system, recording is executed for each CDA unit.

Data processor 1003 receives each VOBU data from the formatter of encoder 50, and then supplies each CDA data to disc drive unit 1002 or hard disc drive unit 2001. The MPU of microcomputer block 30 generates management information required for playing back the recorded data, and recognizes the command representing the end of data recording. After that, the generated management information is sent to data processor 1003. With this operation, the management information is recorded on the disc. Therefore, during encoding, the MPU of microcomputer block 30 receives data unit information (e.g., segmentation information) from encoder 50. At the recording start time, the MPU of microcomputer block 30 also recognizes the management information (file system) read from the optical disc and hard disc, recognizes the unrecorded area on each of the discs, and sets the data recording area on the disc via data processor 1003.

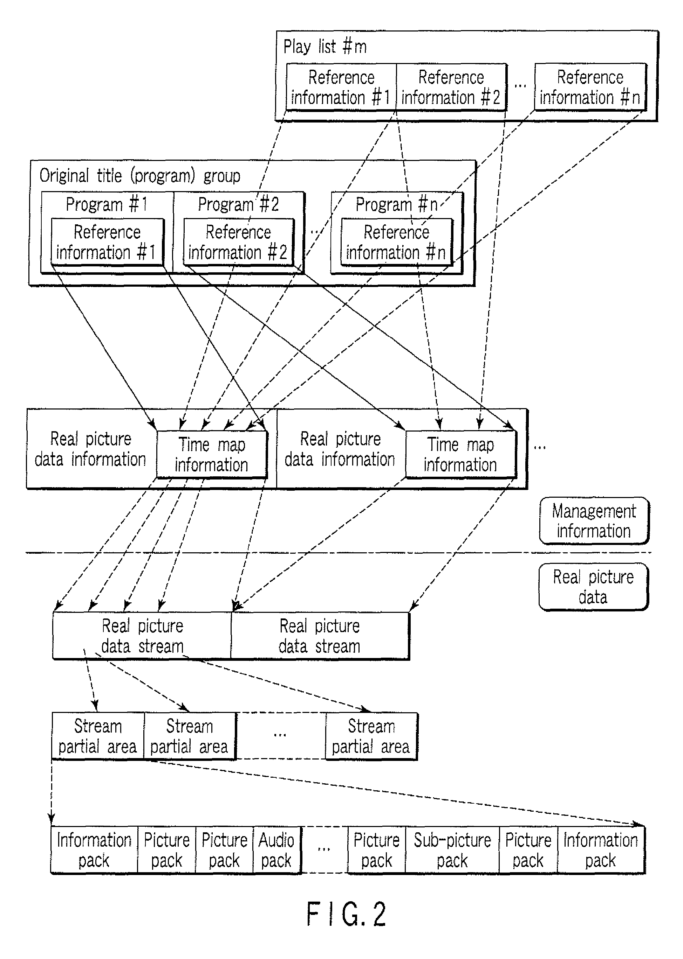

Next, referring to FIG. 2, the relationship between the management information and real picture data serving as the contents will be briefly described. First, the real picture data will be described. Assume that the real picture data are compiled into one file on the recording medium. One file includes one or more real picture data streams. Each real picture data stream can be a recording unit for each video recording process. This video recording unit corresponds to, e.g., a video object (VOB) in the DVD-VR standard. One real picture data stream includes one or more stream partial areas. This stream partial area corresponds to, e.g., a video object unit (VOBU) in the DVD-VR standard, or a group of pictures (GOP) in MPEG2 standard. One stream partial area includes a plurality of packs. As the plurality of packs, an information pack, picture pack, and audio pack are available. A sub-picture pack may also be available.

The information pack corresponds to, e.g., an RDI pack in the DVD video recording (DVD-VR) standard. In this case, this pack includes information indicating the playback start time of the first field of a VOBU to which this pack belongs, information indicating the recording time of a VOBU, manufacturer information (MNFI), and the like. The information pack can also include display control information (DCI) and copy control information (CCI). The display control information indicates aspect ratio information, sub-title mode information, film camera mode information, and the like. The copy control information includes copy enable information or copy inhibition (disable) information.

The picture pack which is obtained by compressing the video data by MPEG2 standard includes a pack header, packet header, and video data. The audio pack which is obtained by processing the audio data by, e.g., linear PCM, MPEG, or AC-3 standard includes a pack header, packet header, and audio data.

Next, the management information will be described. In the management information, original title (program) information serving as information (playback order information) for managing the playback order of the real picture data is defined. This information corresponds to, e.g., the program in the DVD-VR standard. In each of the pieces of original title information (or program information), reference information is defined and linked to the real picture data information serving as the information pertaining to the real picture data to be played back. The pieces of information correspond to a cell, video object information (VOBI), and the like in the DVD-VR standard. As described above, the original title (program) has the information (playback order information) for managing the playback order, and its own real picture data. During video recording, this title is generally generated.

In contrast to this, in some cases, an original title (program) includes only information (playback order information) for managing the playback order. This is play list information which corresponds to a play list in, e.g., the DVD-VR standard. This play list information does not have its own real picture data. As shown in FIG. 2, the play list information is generated as a play list by editing (deleting and adding) the reference information linked to the real picture data information of the original title.

Time map information is described in the real picture data information. This time map information designates a partial area included in the real picture data stream corresponding to the real picture data information. A logical address specifies the link from the original title information of management information or the reference information of play list information to the real picture data information. Also, the link from the time map information to the real picture data stream and its partial area is implemented on the basis of a real picture data stream number, the number of partial areas in this stream, an entry number for each of the partial areas, and the logical address to each of the partial areas. In this arrangement, this apparatus can cope with not only normal playback of the video recorded picture data, but also special playback such as fast-forward/slow playback and fast-reverse playback, and a scene searching process.

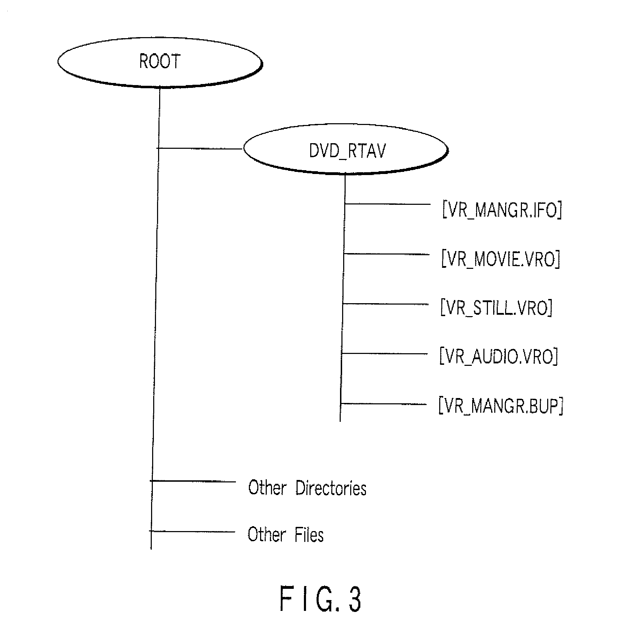

An operation according to the embodiment of the present invention will be described below from FIG. 3. In the following description, the video recording apparatus according to the embodiment of the present invention has the following arrangement. That is, this video recording apparatus is a DVD video recording apparatus based on the DVD video recording standard (DVD-VR standard). In this case, a video recording process is executed on the DVD disc (The DVD-RAM disc or DVD-RW disc are generally used. However, the DVD-R disc can also be used to record the video data.) in a data format called the DVD-VR format. In addition to this, this video recording apparatus also has a function of recording video data on the DVD disc in the DVD video standard. In this case, the video recording process is performed on the DVD disc (e.g., a DVD-R) in a data format called the DVD video format.

In the video recording apparatus according to the embodiment of the present invention, not only the rewritable DVD-RAM disc and DVD-RW disc but also the DVD-R disc serving as a write-once medium can be used. The format for performing the video recording process on each of these DVD discs is not uniquely fixed to each type of the DVD disc. For example, the video recording process can be performed on the DVD-R in the DVD-VR format or the DVD video format.

In the following description, assume that the video recording apparatus according to the embodiment of the present invention serves as a hybrid video recording device which has two types of video recording media, i.e., the DVD and HDD, as shown in a block diagram in FIG. 1. In this case, the picture information can be copied (or moved) between the DVD and the HDD. Note that the contents of the embodiment of the present invention can be applied not only to the hybrid video recording device, but also to a video recording device for only the DVD (this video recording device includes a personal computer having a function of a DVD recorder by using software).

In addition to this, in the video recording apparatus according to the embodiment of the present invention, the partial area in the video recorded title is called a chapter. For example, when video recording is executed in the DVD-VR format, an entry point (EP) defined in the DVD-VR standard in the title is used as the mark of a boundary between the chapters. That is, a zone sandwiched between a given EP and the next EP in the title is called the chapter. Note that the start point and end point of the title serve as chapters irrespective of the presence/absence of the EPs. Hence, in some cases, an EP may not be present at the start point of the first chapter of a title.

FIG. 3 is a schematic view showing the arrangement of directories and files defined in the DVD video recording standard (DVD-VR standard). FIG. 3 exemplifies the directories and files defined by Ver1.1 in the DVD-VR standard. In Ver1.1 in the DVD-VR standard, sub-directory DVD_RTAV is provided under the root directory. The files defined in the standard are stored under this sub-directory DVD_RTAV. That is, under DVD_RTAV, only five types of files shown in FIG. 3 are present. Each of the files will be described below.

First, VR_MANGR.IFO is navigation data for the original title (program) and play list. This navigation data corresponds to the management information shown in FIG. 2 as described above. The play list, entry point (EP), and the like are described in this VR_MANGR.IFO. Even if the picture data is not directly processed, the editing process such as an undesired scene deleting process can be performed by changing the description in this VR_MANGR.IFO. Therefore, when the editing processes such as chapter generation and play list edit are to be performed, this VR_MANGR.IFO serves as a processing target. In addition to this, in this VR_MANGR.IFO, time map information for the real picture data is written in synchronism with video recording. Since the information pertaining to the entire disc is also written in this VR_MANGR.IFO, this VR_MANGR.IFO is immediately generated after initializing the DVD disc.

VR_MANGR.BUP is a backup file of the above-described VR_MANGR.IFO. Since this VR_MANGR.BUP is an option in the standard, it is not always present. However, when using this VR_MANGR.BUP, the contents of this file must be the same as VR_MANGR.IFO.

Alternatively, VR_MOVIE.VRO is an AV (Audio Visual) data file of a recorded moving image, and corresponds to the real picture data shown in FIG. 2 as described above. In this VR_MOVIE.VRO, the packed picture data and audio data are multiplexed and stored, and the sub-picture data is also multiplexed and stored if supported. A VR_STILL.VRO file is the AV data file of a still image. As in VR_MOVIE.VRO, this VR_STILL.VRO file corresponds to the real picture data shown in FIG. 2 as described above. In this VR_STILL.VRO file, the packed picture data is stored, and the audio data and sub-picture data are multiplexed as an option, in some cases. Additionally, a VR_AUDIO.VRO file is a data file which stores postrecording audio information for the still image in the above-described VR STILL.VRO file.

These VR_MOVIE.VRO, VR_STILL.VRO, and VR_AUDIO.VRO files are not present when the DVD disc is initialized. These files are generated when the video recording process is actually executed, to record the picture data and audio data. Note that these three different files need not be always present. For example, in some cases, in a video recording apparatus without any still image recording function or postrecording function, VR_STILL.VRO and VR_AUDIO.VRO files are not present.

The file defined by Ver1.1 in the DVD-VR standard has been described above. In addition to this, in order to increase the operability and add functions in the video recording apparatus, an information file unique to the video recording apparatus can be generated. In this case, these unique information files are not stored under DVD_RTAV. These unique information files are stored immediately under the root directory, or under a unique sub-directory generated under the root directory.

FIG. 4 is a flowchart for explaining the outline of the video recording process in the video recording apparatus according to the embodiment of the present invention. In this process, first, a user menu or a dialog box (not shown) is displayed on, e.g., the screen of monitor 75 shown in FIG. 1, by OSD (step ST800a). This OSD is made so that the user can set a flag in accordance with the significance of the contents (e.g., a broadcast program) to be video-recorded.

More specifically, for example, by the operation of a cursor key and decision key of a remote-controller device (not shown), the user can select a flag (for example, a flag "11"; default setting) indicating important contents, or a flag (for example, a flag "01", "10", or "00") indicating that the capacity savings of an available disc are more important than the reliability of video recording. The flag selected by the user is temporally stored in the memory (e.g., work RAM 31) in MPU 30 shown in FIG. 1. When the user selects no flag (default), or when the flag (in this case, the flag "11") indicating that the important contents is selected according to user's intention, the zone (Rzone) for the video recording process is always closed at the end of the video recording process (YES in step ST800c; accordingly, some data in the RMA area and recording area on the disc are reduced upon closing the zones every video recording process).

Alternatively, when the user wants to select the flag indicating that the capacity savings of an available disc are more important, the user can select the flag ("00") indicating that "the zone (Rzone) for the video recording process is not closed at the end of the recording process" (always NO in step ST800c unless the user outputs a command to close the zone). The user can also select the following flag described in detail, in addition to these flags.

That is, by using a user menu or the like, the user can select the flag ("01") indicating that "the zone (Rzone) for the last video recording process is closed every n times of video recording end processes" where n is an integer equal to or more than 1. The user can also select the flag ("10") indicating that "the zone (Rzone) for the last video recording process is closed every n times of video recording end processes when the remaining amount of the available disc is m% (e.g., when only 30% of the unused disc capacity remains)" where m is an integer of 1 to 99. Note that the values of n and m can be arbitrarily initialized by the user using the remote-controller device, or determined in advance as default setting by the apparatus shown in FIG. 1. For example, when n = 2 and m = 30, if the flag "01" is set by the user's selection, the zone is closed every two times of video recording processes, regardless of the remaining amount of the disc capacity (the reduction of the RMA area and recording area on the disc can be suppressed in closing the zone for one video recording process). If the flag ("10") is set by the user, the zone is closed every video recording end processes when the remaining amount of the disc is 31% or more. Alternatively, when the remaining amount is 30% or less (e.g., in step ST807), the zone is closed once every two times of video recording processes (i.e., only when the remaining amount is small, the reduction of the RMA area and recording area can be suppressed in closing the zone).

After setting one of the above-described flags (or after selecting the default setting "11" without any operations), when the user presses the video recording button of the remote-controller device (not shown), or when the reservation video recording process is started by a video recording reservation timer (not shown) (YES in step ST800b), a video recording start request is called (step ST800). Next, the remaining amount of the recording area for the video recording process is confirmed (step ST801). In the next step ST802, before the video recording process is actually started, it is determined whether the remaining amount is sufficient for performing the video recording process, and the flow branches. If it is determined that the video recordable remaining amount is substantially 0 (The remaining amount need not be strictly limited to 0. The remaining amount can be practically treated as 0 when the remaining amount completely becomes 0 after a few minutes from the start of video recording), a series of processes end without the subsequent video recording processes.

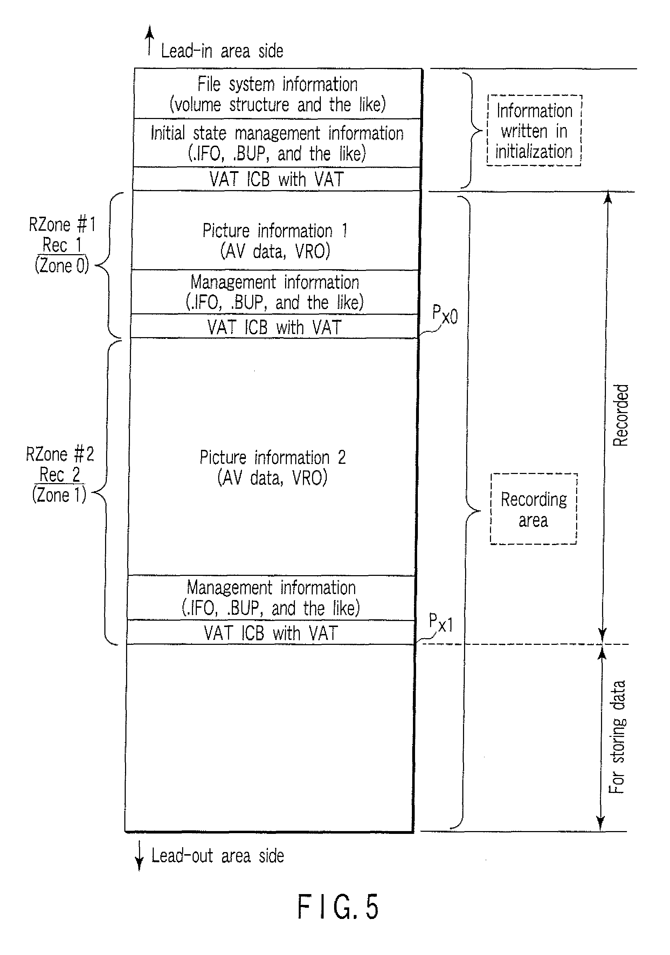

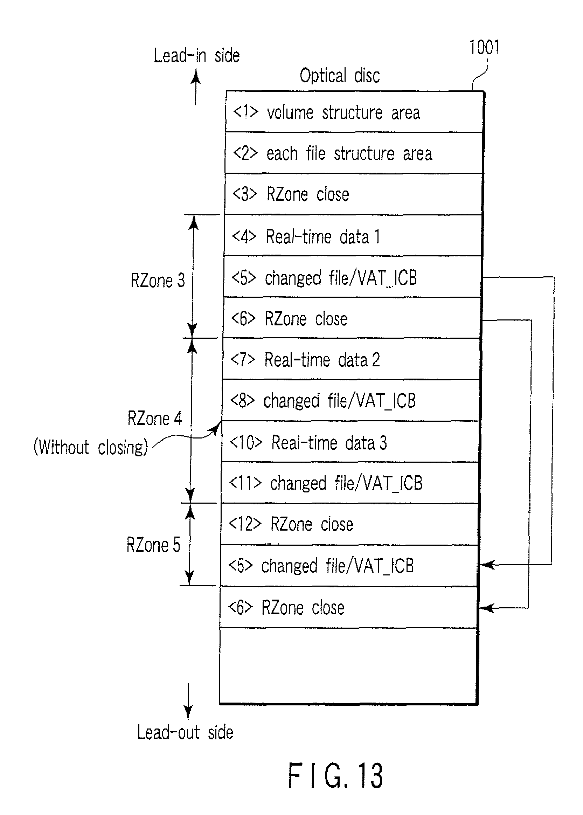

Alternatively, if the remaining amount for the video recording process is not 0, it is determined whether the zone is closed at that time (step ST800d). If the zone is closed (YES in step ST800d), a zone (Rzone) for recording AV data (real-time data) as shown in FIG. 5 or the like is generated in the recording area on the disc (step ST803). The flow then advances to step ST804 to start the video recording process. If the zone is not closed after determining whether the remaining amount is sufficient in step ST802 (NO in step ST800d when NO in step ST800c), the flow skips step ST803, and advances to the video recording process in step ST804 (for example, in Rzone 4 to be described later in FIG. 13, after recording <7> real-time data 2 and <8> changed file/VAT_ICB, <10> real-time data 3 is started to be recorded without closing the zone (Rzone 4)).

Note that in the processes from step ST804 to step ST807, mainly, the video is recorded, and the remaining amount is checked. In these processes, the remaining amount is sequentially checked while video recording. Since the video recording process and the remaining amount checking process are switched every very short time, these processes are assumed to be concurrently performed in broad perspective. That is, in step ST804, the video recording process is performed. In next step ST805, the amount of data generated by video recording is subtracted from the remaining amount of the recording area. Note that the generated data amount by video recording is also subtracted from the second size which is concurrently stored. Next, in step ST806, it is monitored whether a video recording stop request is called. For example, this video recording stop request includes a manual video recording stop request by user's direct operation, a reservation video recording stop request by timer setting, and a reservation video recording interruption request by user's operation. When it is determined that the video recording stop request is called, the flow skips step ST807, and advances to step ST808. When it is determined that the video recording stop request is not called, the flow advances to step ST807.

In step ST807, the remaining amount obtained by subtracting the code amount generated by video recording in step ST805 is checked. After that, it is determined whether the remaining amount for continuing the video recording process, to branch the flow. If it is determined that the remaining amount is 0, the flow advances to next step ST808. Alternatively, if it is determined that the remaining amount is not 0, the flow returns to step ST804. The processes in steps ST804 to ST807 are repeated to continue the video recording process. In step ST808, assuming that the remaining amount is 0, or that a video recording stop request is called, the video recording process stops, and then the series of processes ends.

Next, it is determined whether the zone for the sequence of the video recording processes is closed (step ST800c). This determination is executed in accordance with the flag ("11", "01", "10", or "00") set in step ST800a. That is, if the flag is "00", the video recording zone is not closed even when the video recording process is stopped in step ST808. The flow then returns to step ST800b. (Note that even when the flag is "00", the video recording zone is closed if the user designates to close the zone by the remote-controller device (not shown).) Alternatively, when n = 2 and the flag is "01", the zone is not closed in the first video recording process in steps ST800 to ST808 (NO in step ST800c), but the zone is closed in the second video recording process (YES in step ST800c, step ST809).

The above-described "the zone close process executed every n times of recording processes" can be implemented by the following processes. A counter (register) (not shown) which presets the numerical value of n in MPU 30 shown in FIG. 1 is provided to count down this counter every video recording processes. When the count value = 0, the flow advances to step ST809 (zone close process) to preset the numerical value of n to the counter again.

Furthermore, assume that n = 5 and m = 30, and the flag "10" is selected. When the remaining amount is 31% or more, the video recording zone is always closed in step ST809 upon stopping the video recording process in step ST808. Alternatively, when the remaining amount is 30% or less, the zone is not closed (NO in step ST800c) in the first to fourth video recording processes of steps ST800 to ST808 (unless the user designates to close the zone). In the fifth video recording process, the zone is then closed (YES in step ST800c, ST809). (Note that it can be confirmed whether the remaining amount m is 30%, in step ST807 or ST801.) When the flag set in step ST800a is "11", regardless of the numerical values of n and m, the video recording zone is always closed after the video recording process ends in step ST808.

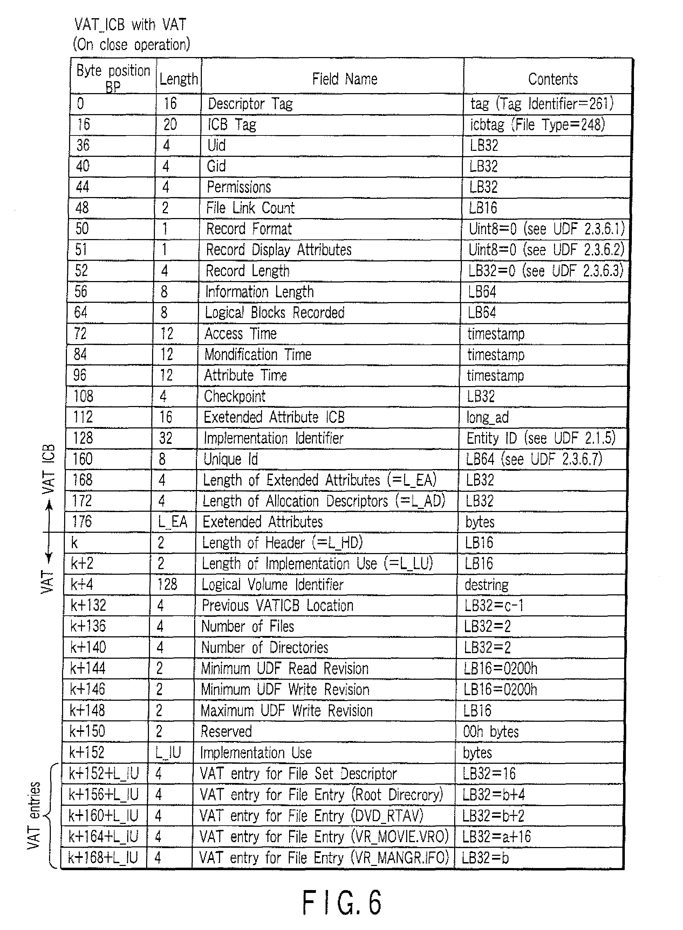

With this operation, the series of video recording processes in the zone ends. After the video recording process ends and the video recording zone is closed (YES in step ST800c), in step ST809, the management information corresponding to the video recording contents (the VR_MANGR.IFO file and its backup file .BUP in FIG. 3) is generated, and log information ("VAT_ICB with VAT" to be described with reference to FIG. 6) is written at the end of the zone.

For example, according to an example (DVD-VR format recording on the DVD-R disc) shown in FIG. 5, when the sequence of video recording process is performed for "Rec 1" in zone 0, picture information 1 (VRO file information of AV data) is recorded from the lead-in side of zone 0. After that, the management information (VR_MANGR.IFO and its .BUP) is recorded at its end, and the log information (VAT_ICB with VAT) is recorded at the end of this zone 0. The end position (Px0) of zone 0 is indicated by the address generated in correspondence with the recording information length of "Rec 1" from the start of zone 0. This address (the end position Px0 of zone 0) can be written in the log information (VAT_ICB with VAT) recorded at the end of zone 0.

Similarly, when the sequence of video recording processes in steps ST804 to ST807 shown in FIG. 4 is executed for "Rec 2" of zone 1 shown in FIG. 5, picture information 2 (VRO file information of AV data) is subsequently recorded immediately after the end position Px0 of zone 0. The management information (VR_MANGR.IFO and its .BUP) is then recorded at its end, and the log information (VAT_ICB with VAT) is finally recorded at the end of zone 1. The end position (Px1) of zone 1 is indicated by the address generated in correspondence with the recording information length of "Rec 2" from the end position Px0 (= start of zone 1) of zone 0, and this address can be written in the log information (VAT_ICB with VAT) recorded at the end of zone 1. That is, the contents of the log information (VAT_ICB with VAT) reflect the change of the recorded contents by the video recording process and the like.

Note that when initializing the DVD-R disc having a recording area as shown in FIG. 5, file system information such as a Universal Disc Format (UDF) volume structure, and the initial state management information can be written in the lead-in start area before the start position of zone 0. In this management information, information serving as the management information in the unique information files of the video recording apparatus may be included in addition to the management information defined in the DVD-VR standard such as VR_MANGR.IFO, VR_MANGR.BUP, and the like described with reference to FIG. 3.

The outline of the above-described processes (FIG. 4) will be summarized as follows. That is, the process (step ST800a) for setting the flag (in the memory of MPU 30) is implemented to designate whether the recording zone is closed after recording given AV contents (real-time digital data). After that, when the flag is set in the first state (flag "11"), the recording zone is always closed after recording the AV contents (YES in step ST800c). Alternatively, when the flag is not set in the first state ("11"), the zone is not closed (flag "00"), or is closed every n times where n is an integer equal to or more than 1 (flag "01" or "10"), in accordance with its state.

Note that if the disc to be used is a rewritable medium such as a DVD-RAM or DVD-RW, when changing the recording contents by the edit process, target data can be updated and rewritten on the disc. Alternatively, on a write-once medium such as a DVD-R, even when a part of a given file is changed upon changing the recording contents on the disc, data must be recorded again in the unrecorded area on the disc. That is, when the edit process is performed, the updated data is not overwritten, but incrementally written. In this case, many pieces of management information such as file management information, parent directory information linked with the file management information, parent directory information of the above parent directory information, and the like must be reconstructed, thus greatly reducing efficiency.

In order to reduce the inefficiency, when data is recorded on the DVD-R by incremental write, a special address conversion table called a virtual allocation table (VAT) is assumed to be used in accordance with the UDF standard. By using this table, when changing the recording contents of the disc, only the changed data and the VAT must be recorded. Hence, an enormous amount of data such as the linked parent directory information need not be changed and incrementally written. In FIG. 5, after recording the management information in the initial state, the VAT at that time and VAT_ICB for identifying the VAT are written as log information (VAT_ICB with VAT) at the end of the information area in which the data is written when initializing the information.

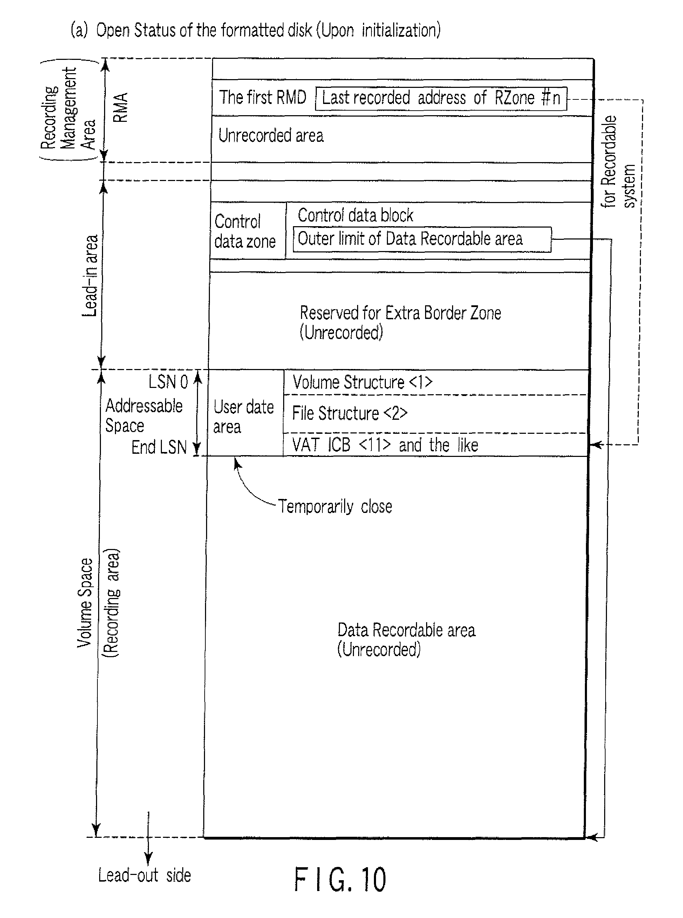

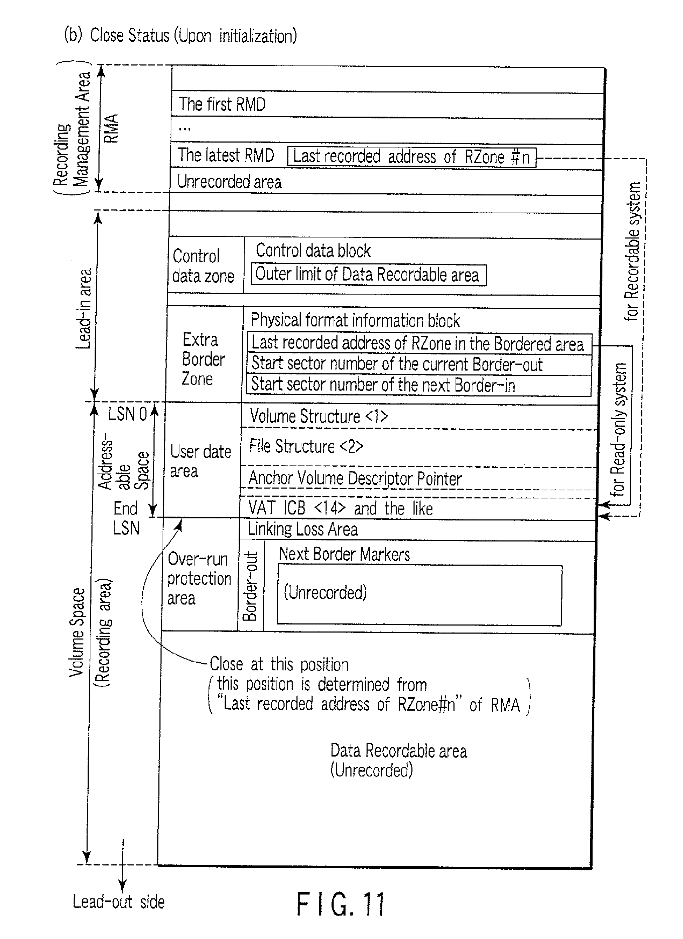

As shown in FIG. 5, the remaining amount obtained by subtracting the amount of initially written information is a recording area which can be used for incrementally writing the data in, e.g., a video recording process and edit process. According to the embodiment of the present invention, this recording area can have the first data size allocated for storing data in the edit process and the second data size allocated for video recording. Note that the remaining amount can be recognized by detecting a logical address (or "Last recorded address of RZone#n" in the RMA area shown in FIG. 10 or 11) recognized as an address which is recorded in, e.g., a file system, and used in bitmap information or management information indicating the recorded state of the physical or logical sector.

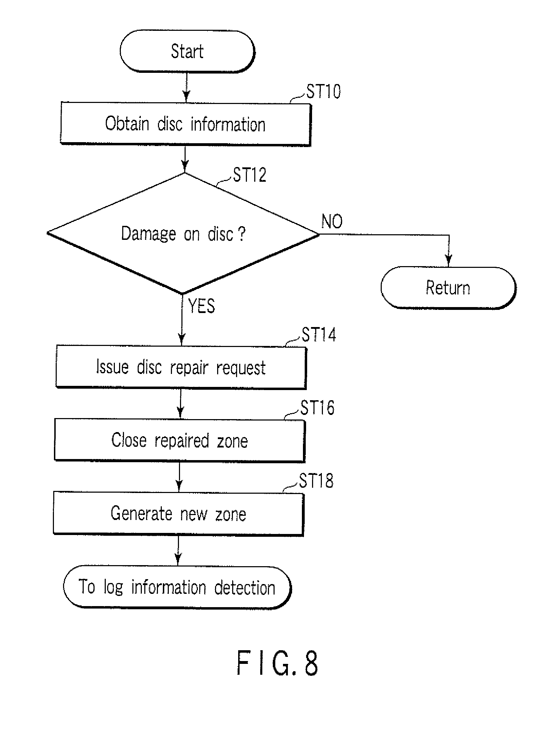

FIG. 6 is a view showing an example of log information (VAT_ICB with VAT) recorded at the end of the zone in the recording area shown in FIG. 5. This log information can be generated when closing the zone (step ST809 in FIG. 4, or step ST16 in FIG. 8), and includes the following pieces of information in the order of the number of byte positions BP.

That is, a descriptor tag is stored at the head byte position = 0. This tag includes two types of tags: one is a volume structure descriptor tag defined by the UDF; and the other is a file structure descriptor tag defined by the UDF. In the DVD-R file structure, virtual allocation table (VAT) and virtual allocation table information control block (VAT_IC8) are recorded in an incremental recording mode. The following contents are allocated to a virtual address in the incremental recording mode. That is, the virtual address = 0 is used for the file set descriptor, and the virtual address = 1 is used for the ICB root directory. Then, the virtual addresses = 2 to 255 are allocated for the file entries of a file recorded in the DVD_RTAV directory or under the DVD_RTAV directory. Since the log information (VAT_ICB with VAT) including these contents is provided at the end of each of the zones, the recorded contents of each of the zones can be mianaged.

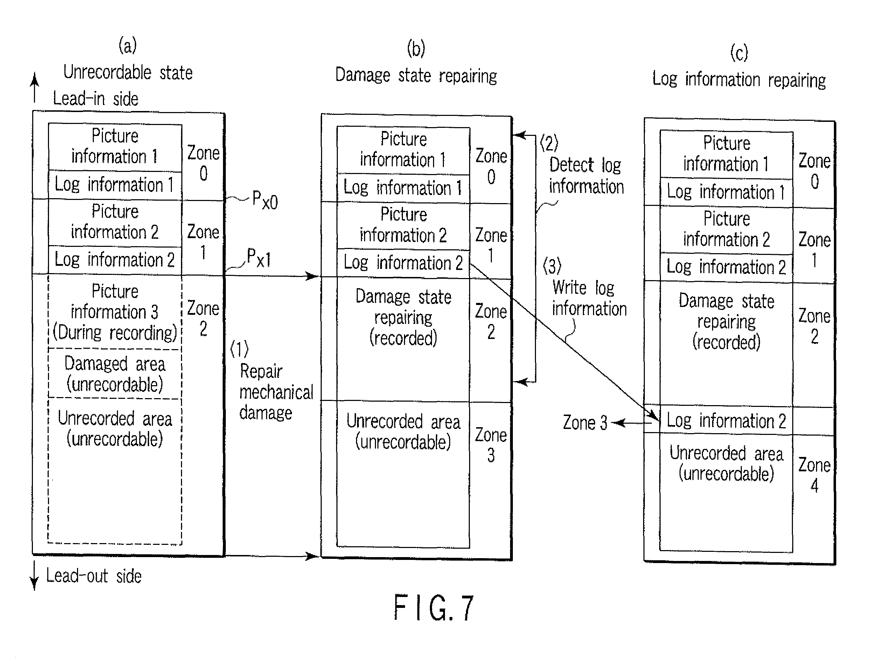

FIGS. 7(a) to 7(c) are views for explaining the outline of the process for, when a mechanical damage is generated on the DVD-R disc during video recording in the DVD-VR format, reusing the disc which is unusable by damage. FIG. 8 is a flowchart for explaining an example of a processing sequence (process on the disc drive side) for repairing mechanical damage on an unusable disc. FIG. 9 is a flowchart for explaining an example of a processing sequence (process on MPU 30 shown in FIG. 1) for generating a video recordable new zone on the DVD-R disc on which the mechanical damage is completely repaired.

After loading the disc (DVD-R) to disc drive unit 1002 shown in FIG. 1, the information on the loaded disc is obtained (step ST10), and it is determined whether the disc is damaged (step ST12). The presence/absence of the damage can be determined by checking whether the ECC correction failure is present in information read out from the disc. If it is determined that the disc has no damage (NO in step ST12), the flow shifts to a control routine of the subsequent processes (video recording process, edit process, playback process, and the like). If it is determined that the disc is damaged (YES in step ST12), a disc repair request is issued (step ST14). In response to this disc repair request, the disc is repaired by causing the firmware of disc drive unit 1002 to fill a sector (sector of correction failure ECC block) portion in which the damage is found, by using predetermined data (The sector portion will not be used thereafter.) Sequentially, the repaired zone (e.g., zone 2) is closed (as a kind of mapping out) (step ST16) to generate a new zone (e.g., zone 3) (step ST18). After that, the flow advances to a log information detection process shown in FIG. 9.

When the flow advances to the log information detection process, first, disc information including the log information (VAT_ICB with VAT shown in FIG. 6) is obtained (step ST20). In this case, the information in the last zone (zone 1 in FIG. 7(a)) is obtained (step ST22), and the obtained last address Px (Px1 in FIG. 7(a)) in the zone is determined (step ST24). If no log information is present at this address (Px1) (NO in step ST26), the information in a zone (zone 0 in this case) immediately preceding the current zone is read out (step ST32), and its last address Px (Px0 in FIG. 7(a)) is determined (step ST24).

If this obtained last address (e.g., Pxl) in the zone has log information (YES in step ST26), it is checked whether the log information is physically valid (e.g., whether the correction failure ECC error does not occur) (step ST28). If the log information is physically invalid (NO in step ST28), the immediately preceding information is read out in step ST32. If the log information is physically valid (YES in step ST28), it is checked whether the readout log information is logically valid (e.g., whether the pieces of file name information are respectively present at byte positions BP of VAT ICB with VAT shown in FIG. 6) (step ST30). If the log information is logically invalid (NO in step ST30), the immediately preceding information is read out in step ST32. If the log information is logically valid (YES in step ST30), this log information (log information 2 in FIGS. 7 (b) and 7(c)) is read out (step ST34), and the readout log information is written (copied) in a new zone (e.g., zone 2) (step ST36).

In FIGS. 7(a) to 7(c), the above-described processing sequence will be summarized as follows. That is, on a DVD-R disc (write-once medium), as shown in FIG. 7(a), assume that a problem such as ECC correction failure occurs in zone 2 during recording the information (or playing back the information after recording) in zone 2 subsequent to recorded zones 0 and 1. It is determined that mechanical damage (a defect generated during manufacturing the disc, or a large flaw or dirt on the surface of the disc) is present in zone 2 on the disc. When disc drive unit 1002 shown in FIG. 1 detects this damage, the sector (ECC block) having the problem is filled by 00h and FFh to repair the damage. After that, new zone 3 is generated in the unrecorded area subsequent to the filled damaged area (recording area which will not be used thereafter: zone 2) as shown in FIG. 7(b). In this case, at the end of zone 2, as shown in FIG. 7(c), the latest log information (log information 2 in this case) which can be normally read out of pieces of log information 1 and 2 in preceding zones 0 and 1 is copied.

As described above, on the DVD-R disc which is unusable due to damage, a new video recording process can be performed in zones subsequent to zone 3 (the unusable DVD-R disc can be reused).

FIG. 10 is a view for explaining the state of the write-once medium (e.g., a DVD-R disc) upon initialization. This medium has a recording management area (RMA) on a lead-in side (the innermost peripheral side of the disc), and stores control data in the next lead-in area. In the next volume space (recording area), a user data area is formed. In this user data area, information control block (VAT_ICB) information of a volume structure, file structure, and virtual allocation table is written. The area (zone) is temporally closed at this time. A new information recording process is then started from this closed zone toward a lead-out side. Note that the end position of the closed zone is known from the first RMD (the last recording address of RZone#n) recorded in the RMA.

FIG. 11 is a view for explaining the state of the write-once medium used for the recording process upon initialization. In accordance with the number of times of video recording processes, "first RMD" to "latest RMD" are written in the RMA. The end position of the last closed zone used for the last recording process on the medium is known from "last recording address of RZone#n" in the last "latest RMD". Accordingly, the recording state of the medium can be recognized from the log information (VAT_ICB with the virtual allocation table; see FIG. 6) at the acquired end position.

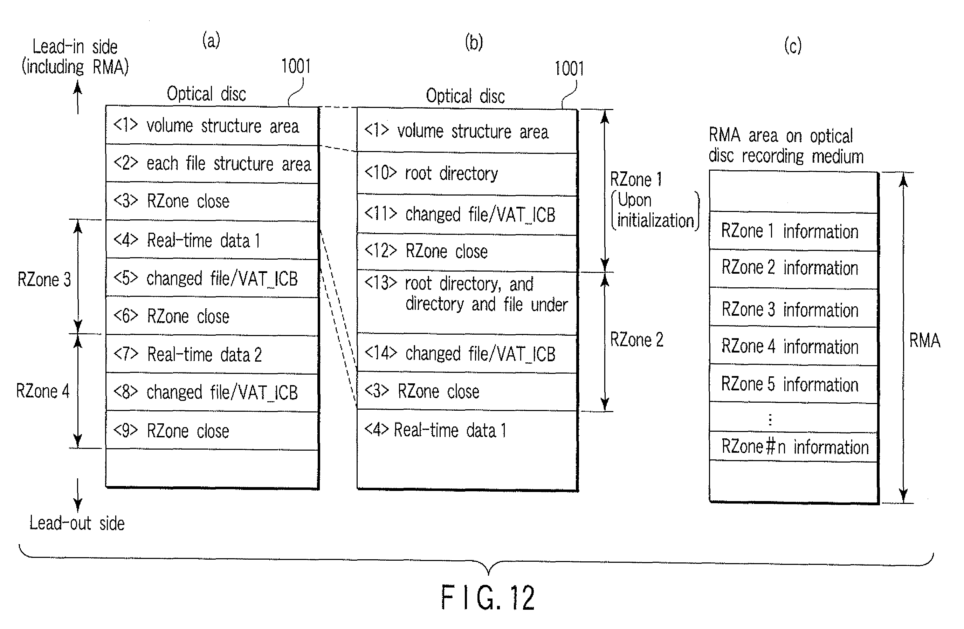

FIGS. 12(a) to 12(c) are views showing how to form a plurality of zones (a plurality of Rzones), and how to use management information (RMA) of a medium corresponding to the recording process, when the recording process is performed on the write-once medium upon initialization. FIGS. 12(a) to 12(c) show the state in which Rzone is closed (the recording zone is closed) on an optical disc recording medium (e.g., a DVD-R disc) recording real-time data (e.g., TV broadcast video recording data).

Upon formatting (initializing) the optical disc recording medium, as shown in FIG. 12(b), <10> root directory and <11> changed file/VAT_ICB are recorded, and <12> RZone close is executed. After that, <13> root directory, directories and files under the <13> root directory, and <14> changed file/VAT_ICB are recorded. After that, the <3> RZone close is executed. At this time, the first recording zone RZone 1 and the next recording zone RZone 2 are formed.

After these processes, when the picture (the data such as digital broadcast) is recorded, as shown in FIG. 12(a), <4> real-time data 1 and <5> changed file/VAT_ICB for managing the picture data are recorded. By performing the RZone close, a check point (corresponding to "Last recorded address of RZone#n" shown in FIG. 10 or 11) for detecting VAT_ICB recorded in <5> changed file/VAT_ICB is generated. FIG. 12 (c) shows an example of management information (including check point information) of each RZone, which is written in the RAM area every RZone close process.

Originally, the check point is ideally formed for each recorded picture data (in other words, the zone is closed every video recording end prooess). However, the recordable capacity is limited in the RMA area on the optical disc recording medium. Hence, when the RZone close process is frequently performed to completely use the RMA area, the recording medium cannot record any more picture data even if the volume space has a free capacity on the recording medium. In order to avoid such a problem (i.e., in order to suppress the reduction of the RMA area), the frequency of the RZone close process can be arbitrarily set. This process for "arbitrarily setting the frequency of the RZone close process" corresponds to step ST800a and ST800c shown in FIG. 4.

FIG. 13 is a view showing how to use a zone (Rzone 4) in which the recording process is performed on the write-once medium upon initialization, according to an embodiment of the present invention (when the frequency of the RZone close process is arbitrarily set). That is, since the RZone close process is not performed between <7> real-time data 2 and <10> real-time data 3, no check point is formed. When any problems such as a write error (e.g., an ECC correction failure) occur on the medium without the check point, <11> changed file/VAT_ICE and <12> RZone close are not correctly recorded. Hence, recorded <7> real-time data 2 and <10> real-time data 3 lose the recorded link information.

Upon using the log management (log information shown in FIG. 7 which includes VAT_ICB with VAT shown in FIG. 6) with the check point ("Last recorded address of RZone#n" shown in FIG. 10 or 11), VAT_ICB which manages the data in RZone 3 is recorded (copied) from the information of RZone 3 formed by <6> RZone close shown in FIG. 13 to RZone 5 via <5> changed file/VAT_ICB. With this operation, even when an ECC error or the like occurs in RZone 4, the medium management state can be returned to the state of RZone 3. Accordingly, even if the portion (RZone 4) cannot be used due to the error, the medium can be used.

In order to reduce the probability that the medium cannot be used due to the above-described error, the RZone close process is always performed when recording important real-time data (the flag is set to "11" in step ST800a shown in FIG. 4). The process for ensuring the integrity of the real-time data is then applied. Conversely, when the capacity savings of an available medium are more important than the integrity of data, the RZone close process is arbitrarily set (that is, the flag is set to "00", "01", or "10" in step ST800a shown in FIG. 4). As a result, the remaining amount of the RMA area can also be saved.

FIG. 14 is a flowchart for explaining an example of a process for initializing this medium again after the recording process is performed on the write-once medium upon initialization. This process is presumed that the zone is temporarily closed (Rzone is temporarily closed) upon initialization (in the state wherein the root directory is recorded). For example, when a recorded area cannot be used due to an error upon using partway the available medium (e.g., a DVD-R disc) (or when, even if the error does not occur, the user wants to reuse the disc as a new one having a recording area prevented from being accessed), the process shown in FIG. 14 can be used for initializing the medium again (i.e., returning to the state immediately after generating the root directory shown in FIG. 3), rather than the repair process shown in FIG. 8.

First, the initialization process is designated by the user using the remote-controller device or the like (not shown) (step ST40). "RZone#n last recording address (reference symbol #n denotes the number of the last recorded zone)" in the RMA area on the disc is read out to calculate the position of "recorded VAT_ICB (in FIG. 12, e.g., <8> <5> <14> <11> changed file/VAT_ICB or the like)" from the position indicated by "RZone#n last recording address" to the root directory (step ST42). VAT_ICB from the acquired position to the root directory is decoded on work RAM 31 in MPU 30 shown in FIG. 1 (step ST44). The current write start position (e.g., immediately after <9> Rzone close position shown in FIG. 12(a)) is then calculated from "RZone#n last recording address" in the RMA shown in FIG. 11 (step ST46). VAT_ICB decoded on work RAM 31 is written in the current write start position which is acquired as described above (step ST48), and Rzone is closed at this position (step ST50). After that, on the disc, the area from the Rzone close position to the end on the lead-out side of the volume space shown in FIG. 10 can be reused as a new one (although the capacity is smaller than that of a new disc).

### <Effects According to Embodiment>

(1) A failure portion on a write-once medium which is unusable due to a mechanical error in use is repaired to avoid the failure portion from being used. After that, video recording can be performed in an unused area, and the write-once medium which is unusable because of the mechanical error can be reused.
(2) When a copy-once digital broadcast program is video-recorded on an HDD, and the video-recorded contents are sequentially moved to a DVD disc, the video recorded contents are inhibited from moving to a DVD-R disc in DVD video format. However, the video recorded contents can be moved to the DVD-R disc in DVD-VR format. When the contents are to be moved from an HDD in DVD-VR format, in some cases, 1 + 1/3 discs are required because only one DVD-R disc cannot record all the program contents. In this case, the DVD-R disc (with a recording amount smaller than that of a new disc) which is made usable (or initialized) by the present invention can be used for moving and video recording the contents, as the 1/3 disc.
(3) The RMA area on the optical disc recording medium is reduced in proportion to the number of times of the RZone close processes (the total number of times of the close processes of the recording zones, or the total number of the recording zones). Since the RZone close process is arbitrarily performed on the basis of user setting, the reduction of the RMA area (or a portion of the volume space) on the optical disc recording medium can be suppressed.
(4) When recording data on the optical disc recording medium, by closing RZone, information (e.g., Last recorded address of RZone#n) in the RMA area is used as the check point for detecting VAT_ICB, thereby performing log management.
(5) Since the check point is intentionally set in the important data (that is, the important video recording zone must be temporally closed), even when the write error occurs (or even when an error occurs after writing), the disc can be returned to the state before the occurrence of an error by log management.
(6) Since RZone is intentionally closed after generating the root directory (in the state shown in FIG. 10), the medium can be returned to the state after recording the root directory, by using the log management information as needed.

The present invention is not limited to the above embodiment, and various changes can be made without departing from the spirit and scope of the present invention in the present or future phase on the basis of available techniques at that time. In addition, the embodiments can be appropriately combined as much as possible as needed. In this case, a combined effect can be obtained. Furthermore, the embodiment incorporates inventions of various phases, so various inventions can be extracted by appropriately combining a plurality of disclosed components. For example, even when an invention is extracted by omitting several components from the all components disclosed in the embodiment, the remaining arrangement can be extracted as the invention.

## Claims

1. A recording method for executing digital recording on a write-once medium having a recording area which is configured to include a plurality of recording zones between a lead-in side and a lead-out side, said method **characterized by** comprising:
when a plurality of recording zones (RZones 3, 4, 5) are to be sequentially formed from the lead-in side to the lead-out side, in at least one (e.g., RZone 4) of said plurality of recording zones, recording (ST804-ST808 in FIG. 4) a first digital data (<7>+<8> in FIG. 13), recording (ST804-ST808 in FIG. 4) a second digital data (<10>+<11> in FIG. 13) without closing said one zone (RZone 4), and then closing (ST809 in FIG. 4) said one zone (RZone 4).

2. A method according to claim 1, **characterized in that** said first digital data includes a first digital content (<7> in FIG. 13) and first management information (<8> in FIG. 13), and said second digital data includes a second digital content (<10> in FIG. 13) and second management information (<11> in FIG. 13).

3. A method according to claim 1, **characterized in that** the closing process (ST809 in FIG. 4) includes a process for recording management information (.IFO) and log information (VAT_ICB with VAT) of the first digital data (<7>+<8> in FIG. 13) and the second digital data (<10>+<11> in FIG. 13).

4. A method according to claim 1, which further comprises performing a process (ST800a in FIG. 4) for setting a flag designating whether the recording zone is closed after recording the first digital data, and in which, when the flag is set in a first state ("11"), the recording zone is closed (yes at ST800c in FIG. 4) after recording the first digital data, and, when the flag is not set in the first state, the zone is not closed (no at ST800c in FIG. 4; the flag = "00"), or is closed every n times of recording processes where n is an integer which is at least one, in accordance with the state (the flag = "01" or "10").

5. A method according to claim 4, **characterized in that** the process for closing the zone every n times of processes is executed when a remaining amount of the recording area is set to be not more than a predetermined ratio.

6. A method according to claim 1, **characterized in that** the write-once medium is initialized before recording the first digital data and the second digital data, and which further comprises initializing (ST40-ST50 in FIG. 14) the write-once medium again after recording the first digital data and the second digital data.

7. A playback apparatus configured to play back recorded contents from the recording area of the write-once medium on which recording is executed according to the method defined in claim 1.

8. A recording apparatus for executing digital recording on at least one of
a write-once medium having a recording area configured to include a plurality of recording zones between a lead-in side and a lead-out side, and
a hard disc apparatus having a recording area configured to include a plurality of recording zones, said apparatus **characterized by** comprising:
when said plurality of recording zones are sequentially formed in the recording area, in at least one of said plurality of recording zones,
a first recorder (MPU 30 for executing ST804-ST808) configured to record first digital data (<7>+<8>);
a second recorder (MPU 30 for executing ST804-ST808 + ST800c/no) configured to record second digital data without closing said one zone; and
a closer (MPU 30 for executing ST800c/yes + ST809) configured to close said one zone (e.g., RZone 4).
